# EUROPÄISCHE PATENTANMELDUNG

(11) **EP 3 869 331 A1**
(43) Veröffentlichungstag der Anmeldung: **25.08.2021**
(21) Anmeldenummer: 20158490.1
(22) Anmeldetag: 20.02.2020
(51) Int. Cl.: G06F 9/445

(54) **VERFAHREN ZUR ANPASSUNG VON F-ADRESSEN UND ANLAGENMODUL**

(71) Anmelder: Siemens Aktiengesellschaft, 80333 München (DE)
(72) Erfinder: Barthel, Herbert, 91074 Herzogenaurach (DE); Hödl, Peter, 8047 Graz (AT); Meyer, Thomas Markus, 90475 Nürnberg (DE); Schönfelder, Gerhard, 8010 Graz (AT); Taschke, Ulrich, 90766 Fürth (DE); Vogel, René, 91217 Hersbruck (DE); Walter, Maximilian, 90408 Nürnberg (DE)

(57) **Zusammenfassung**

Um eine Anpassung von F-Adressen für ein zu einem bereits existierenden ersten Anlagenmodul (S1) in Betrieb zu nehmendes zweites Anlagenmodul (S2), zu realisieren wird vorgeschlagen
- in ein zweites Hauptautomatisierungsgerät (PLC2) eine Kopie eines ersten Anwenderprogramms (P1,P1') zu laden und damit ein zweites Anwenderprogramm (P2) in dem zweiten Hauptautomatisierungsgerät (PLC2) zu erzeugen,
- für das zweite Hauptautomatisierungsgerät (PLC2) wird dann eine zweite, neue F-Quelladresse (FQ2) vergeben,
- vom zweiten Hauptautomatisierungsgerät (PLC2) wird jeweils ein Konfigurationstelegramms (KT1, KT2, KT3) mit der zweiten F-Quelladresse (FQ2) und der jeweiligen F-Zieladresse (FZ1,FZ2,FZ3) zu den Unterautomatisierungsgeräten (D1,D2,-D3) des zweiten Anlagenmoduls (S2) gesendet, wobei die zweite F-Quelladresse (FQ2) in den Unterautomatisierungsgeräten (D1,D2,D3) gespeichert wird, und wobei während dieses Vorgangs das zweite Netzwerk (N2) kommunikativ vom ersten Netzwerk (N1) getrennt wird,
- in den Unterautomatisierungsgeräten (D1,D2,D3) wird die gewollte Anpassung der F-Quelladresse (FQ2) mittels des Konfigurationstelegramms (KT1, KT2, KT3) erkannt und daraufhin wird geprüft, ob das Konfigurationstelegramm (KT1, KT2, KT3) zusätzlich die jeweilige F-Zieladresse (FZ1,FZ2,FZ3) des jeweiligen Unterautomatisierungsgerätes (D1,D2,D3), für welche die F-Quelladresse (FQ2) angepasst werden soll, enthält, wenn diese Prüfung positiv ausfällt wird die zweite F-Quelladresse (FQ2) für das Unterautomatisierungsgerät (D1,D2,D3) übernommen.

## Beschreibung

Die Erfindung betrifft ein Verfahren zur Anpassung von F-Adressen für ein zu einem bereits existierenden ersten Anlagenmodul in Betrieb zu nehmendes zweites Anlagenmodul, wobei die Anlagenmodule jeweils ein erstes Hauptautomatisierungsgerät, beziehungsweise ein zweites Hauptautomatisierungsgerät, eine Mehrzahl von Unterautomatisierungsgeräten und ein Netzwerk aufweisen, wobei die Hauptautomatisierungsgeräte und die Unterautomatisierungsgeräte für eine funktional sichere Kommunikation über das Netzwerk ausgelegt sind und in dem ersten Anlagenmodul bereits im Vorfeld für eine funktional sichere Verbindungsidentifizierung und für eine funktional sichere Kommunikation F-Adressen vergeben worden sind und dadurch dem ersten Hauptautomatisierungsgerät eine erste F-Quelladresse und den Unterautomatisierungsgeräten entsprechend jeweils eine F-Zieladresse zugeordnet wurde, wobei in dem ersten Hauptautomatisierungsgerät ein erstes Anwenderprogramm geladen wurde, in welchem die F-Zieladressen zur Adressierung genutzt werden.

Im Sinne der Erfindung wird unter funktionaler Sicherheit die Definition gemäß der Norm IEC 61508 verstanden.

Im Sinne der Erfindung ist unter einer Serienmaschine eine Maschine, z.B. Werkzeugwechsler, vorzugsweise in einer modularen Bauweise zu verstehen. Bei diesen Maschinen können gleiche Komponenten und gleiche Adressen sowie Namensraumvergabe vorhanden sein. In einem Anlagen-Betrieb kann es daher vorkommen, dass zwei Serienmaschinen vom gleichen Typ eingesetzt werden und zudem noch über ein Netzwerk gekoppelt sein.

Bisher wurde durch technische oder organisatorische Maßnahmen sichergestellt, dass bei einer sicheren Verbindungsidentifizierung zwischen zwei Kommunikationsteilnehmern in einem Kommunikationssystem ein Telegramm, ein lokales Netz des Kommunikationssystems nicht verlassen kann. In einem anderen Anwendungsfall für Serienmaschinen müssen im Kommunikationsnetz zwischen zwei Serienmaschinen Netztrenner installiert werden, die dafür sorgen, dass die Telegramme das lokale Netz nicht verlassen können.

Die Systembeschreibung "Profisafe Systembeschreibung, Technologie und Anwendung", Version November 2010, Bestellnummer 4.3.4.1, Herausgeber Profibusnutzerorganisation e.V. beschreibt die Realisierung einer sicherheitsgerichteten Kommunikation und insbesondere einer sicheren Verbindungsidentifizierung bei Profibus- und Profinet-Protokollen.

Bei den bekannten Verfahren zur sicherheitsgerichteten Kommunikation, insbesondere in der Automatisierungstechnik, muss eine Adressbeziehung, umfassend eine Ziel- und eine Quelladresse, beispielsweise von Profinet-Teilnehmern, netzweit eindeutig sein.

Ein Beispiel sei das Sicherheitsprotokoll PROFIsafe genannt. Bei Profisafe wird ein 32 Bit Codename, welcher einer Adressbeziehung entspricht, zur eindeutigen Verbindungsidentifizierung genutzt. Die Codenamen können nicht weltweit eindeutig vergeben werden.

Im Hinblick auf einen zukünftigen Kommunikationsstandard, nämlich dem OPC-UA Standard, werden Hersteller von Serienmaschinen dies als nicht akzeptabel ansehen.

Eine F-Adresse ist eine eindeutige Adressbeziehung zwischen zwei Kommunikationsteilnehmern. Die F-Adresse dient in einer auf funktionale Sicherheit ausgelegten Kommunikation der eindeutigen Identifikation von einer Quelle und einem Ziel. Jede F-Peripherie hat deshalb zwei Adressenanteile: F-Quelladresse, F-Zieladresse. Ein oder beide Adressanteile können dabei zur Absicherung verwendet werden.

Für das eingangs genannte Verfahren zur Anpassung von F-Adressen wird die Aufgabe dadurch gelöst, dass für eine Anpassung der F-Adressen für das zweite Anlagenmodul, welches nach einem Anlagenkonzept für die Serienfertigung von Anlagenmodulen ausgehend von einem Ur-Anlagenmodul analog zu dem ersten Anlagenmodul aufgebaut wurde, folgende Schritte durchgeführt werden: In das zweite Hauptautomatisierungsgerät wird eine Kopie des ersten Anwenderprogramms geladen und damit ein zweites Anwenderprogramm in dem zweiten Hauptautomatisierungsgerät erzeugt, für das zweite Hauptautomatisierungsgerät wird eine zweite F-Quelladresse vergeben, vom zweiten Hauptautomatisierungsgerät wird jeweils ein Konfigurationstelegramm mit der zweiten F-Quelladresse und der jeweiligen F-Zieladresse zu den Unterautomatisierungsgeräten des zweiten Anlagenmoduls gesendet, wobei die zweite F-Quelladresse in den Unterautomatisierungsgeräten gespeichert wird, und wobei während dieses Vorgangs das zweite Netzwerk kommunikativ vom ersten Netzwerk getrennt wird, in den Unterautomatisierungsgeräten wird die gewollte Anpassung der F-Quelladresse mittels Konfigurationstelegramms erkannt und daraufhin wird geprüft, ob das Konfigurationstelegramm zusätzlich die jeweilige F-Zieladresse des jeweiligen Unterautomatisierungsgerätes, für welche die F-Quelladresse angepasst werden soll, enthält, wenn diese Prüfung positiv ausfällt wird die zweite F-Quelladresse für das Unterautomatisierungsgerät übernommen, im zweiten Hauptautomatisierungsgerät wird geprüft, ob alle Unterautomatisierungsgeräte angepasst wurden.

Da nun für das zweite Hauptautomatisierungsgerät eine zweite, weitere F-Quelladresse vergeben wurde, braucht man zwischen diesen beiden Anlagenmodulen, welche nunmehr über ein Netzwerk verbunden sind, keine Kommunikations-Netztrenner "Trennung von Layer 2 Netzen" zwischen den Serienmaschinen zu installieren. Vorher war dies ausreichend, da eine Profisafe-Kommunikation ein Layer 2 Netz prinzipiell nicht verlassen kann, bei zukünftigen Safety over OPC UA Kommunikationen kann durch die Trennung von Layer 2 Netzen nicht mehr das Nicht-Verlassen gewährleistet werden. Komponenten mit Safety over OPC UA sind prinzipiell weltweit erreichbar. Zusätzlich ist noch zu bedenken, dass es seit einiger Zeit keine reinen Router mehr gibt, bei denen man die Trennung des Layer 2 per Fehlerausschluss argumentieren kann. Erfindungsgemäß ist es nun von Vorteil, dass bei der Inbetriebnahme eines weiteren Anlagenmoduls, welches nach dem Serienmaschinenprinzip gefertigt wurde, eine neue Quelladresse vergeben wird, und die neue Quelladresse durch Anfrage an die Unterautomatisierungsgeräte dort hinterlegt wird.

Eine neue F-Quelladresse, also eine Master ID, gibt es nun nur einmal pro gesamter Serienmaschine. Die zweite, neue F-Quelladresse, oder neue Master ID wird derart vorgesehen, dass sie außerhalb des Anwenderprogramms auf dem zweiten Hauptautomatisierungsgerät gespeichert wird. Dies hat den Vorteil, dass das kopierte und schon einmal geprüfte Anwenderprogramm nicht verändert wird.

Eine F-Quelladresse bzw. eine Master ID könnte bei einer ersten Variante als mindestens 32 Bit echter Zufallswert (z.B. 32 Bit CRC einer Microsoft GUID, die beim Inbetriebnahmetest vergeben wird, und nicht Bestandteil des sicheren Automatisierungsprogramms ist) sein. In einer zweiten Variante könnte die Master-ID als eindeutiger Wert, der während der Inbetriebnahme manuell vergeben wird, und sich von allen Master ID in der Anlage unterscheiden muss, sein.

Pro Verbindung gibt es eine F-Zieladresse, die innerhalb eines Anlagenmoduls eindeutig ist. D.h. ein Unterautomatisierungsgerät könnte auch mehrere Verbindungen aufbauen und hat dementsprechend mehrere F-Zieladressen. Zusätzlich gibt es eine F-Quelladresse (Master-ID), die innerhalb eines Anlagenmoduls eindeutig ist und die für jede Verbindung unterschiedlich sein kann, vorzugsweise aber für alle Verbindungen eines Anlagenmoduls identisch ist. Bei Kommunikationsverkehr über Anlagenmodule hinweg, könnte eine andere Master-ID für die Verbindung eingesetzt werden.

Die F-Zieladresse und die F-Quelladresse (F-Sub-ID und F-Master-ID) sind in beiden Endpunkten einer Verbindung (also jeweils im Hauptautomatisierungsgerät und im Unterautomatisierungsgerät) gespeichert. Zur Laufzeit prüft ein Empfänger bzw. das Unterautomatisierungsgerät die ID's bzw. F-Zieladresse und F-Quelladresse bei jedem Telegramm. Dadurch können Adressierungsfehler erkannt werden, wenn die ID's, nämlich die F-Zieladresse und die F-Quelladresse nicht zu den abgespeicherten Adressen passen.

Erfindungsgemäß wird also mit einer Art Kommunikations-Protokoll gearbeitet, welche die Master ID in alle der Maschine zugeordneten Devices schreibt und zusätzlich wird durch geeignete Mittel während dieses Vorgangs die kommunikative Trennung von den übrigen Maschinen im Netz durchgeführt. Eine Logik oder ein weiteres Ablaufprogramm erkennt in den sicheren Unterautomatisierungsgeräten (Devices) die Änderung der Master ID als zulässig an, wenn in der Anfrage die entsprechende F-Zieladresse (Sub ID) der Erwartungshaltung im Unterautomatisierungsgerät entspricht. Erwartungshaltung ist, dass die Anfrage die gleiche Ziel-Adresse aufweist wie in dem Anfragetelegramm drin steht.

Demnach wird vorteilhafter Weise zusätzlich bei jeder Kommunikation zu einem Unterautomatisierungsgerät in dem Unterautomatisierungsgerät geprüft, ob die gespeicherten F-Adressen mit denen in einem für die Kommunikation empfangenen Telegramme übereinstimmen.

Für das einmal getestete fehlersichere Anwendungsprogramm und den darauf angewendeten Kopiervorgang ist es von entscheidendem Vorteil, dass über einen Code des Anwenderprogramms des ersten Hauptautomatisierungsgeräts eine erste Signatur gebildet wird und diese erste Signatur beim Erzeugen des zweiten Anwenderprogramms den zweiten Hauptautomatisierungsgerät mit geliefert wird, wobei das zweite Hauptautomatisierungsgerät über das zweite Anwenderprogramm eine zweite Signatur bildet und ein Vergleich der beiden Signaturen durchführt und für den Fall der Ungleichheit, eine Fehlermeldung ausgegeben wird.

Diese funktional sichere Kommunikation über das Netzwerk wird vorteilhafter Weise mittels OPC UA Safety oder PROFIsafe durchgeführt.

Die eingangs genannte Aufgabe wird für ein Anlagenmodul umfassend ein Hauptautomatisierungsgerät, eine Mehrzahl von Unterautomatisierungsgeräten, ein Netzwerk, wobei das Hauptautomatisierungsgerät und die Unterautomatisierungsgeräte für eine funktional sichere Kommunikation über das Netzwerk ausgelegt sind, dazu ist das Hauptautomatisierungsgerät mit einer ersten F-Quelladresse und die Unterautomatisierungsgeräte entsprechend mit einer F-Zieladresse ausgestaltet, und in dem Hauptautomatisierungsgerät ist ein fehlersicheres Anwenderprogramm gespeichert, dadurch gelöst, dass für eine Anpassung der F-Adressen für das Hauptautomatisierungsgerät und die Unterautomatisierungsgeräte ein Master-Ablaufprotokoll in dem Hauptautomatisierungsgerät implementiert ist, wobei das Master-Ablaufprotokoll ausgestaltet ist, auf ein Kommando, welches zur Anpassung der F-Adressen auffordert, zu warten und folgendes auszuführen: Eine zweite F-Quelladresse wird entweder intern generiert oder mit dem Kommando mitgeliefert, und dann wird jeweils ein Konfigurationstelegramm mit der zweiten F-Quelladresse und der jeweiligen F-Zieladresse zu den Unterautomatisierungsgeräten gesendet, weiterhin ist in den Unterautomatisierungsgeräten ein Slave-Ablaufprotokoll implementiert, und ausgestaltet in den Unterautomatisierungsgeräten die gewollte Anpassung der F-Quelladresse mittels des Konfigurationstelegramms zu erkennen und daraufhin zu prüfen, ob das Konfigurationstelegramm zusätzlich die jeweilige F-Zieladresse des jeweiligen Unterautomatisierungsgerätes für welche die F-Quelladresse angepasst werden soll, enthält, wenn diese Prüfung positiv ausfällt, wird die zweite F-Quelladresse für das Unterautomatisierungsgerät übernommen.

Als Vorteil wird das einfache Anpassen einer Serienmaschine im Hinblick auf eine sichere Kommunikation angesehen. Bei Serienmaschinen kann man auch den Begriff "Variantenmanagement" einführen, dies ist der Überbegriff für ein innovatives Maschinenkonzept für die Serienfertigung modularer Maschinen, dieses Konzept das möglichst einfach an Kundenanforderungen angepasst werden kann, hat mit Hilfe der Erfindung die Voraussetzung erfüllt, dass nun eine flexible Möglichkeit geschaffen ist, eine einmal in dem Uranlagentyp festgelegte Adressierung für alle Anlagen- bzw. Maschinenteile aufwandsarm ohne Änderung in einen Engineeringprojekt anzupassen.

In Bezug auf das in dem Ur-Anlagenmodul einmal festgelegte und programmierte fehlersichere Anwenderprogramm, welches geprüft, getestet und ggf. TÜV zertifiziert wurde, ist es von besonderem Vorteil, wenn man über dieses getestete, geprüfte, zertifizierte Anwenderprogramm eine Signatur bildet. Dabei ist das Master-Ablaufprotokoll in dem Hauptautomatisierungsmodul weiterhin dazu ausgestaltet, eine erste Signatur eines Original-Anwenderprogramms entgegenzunehmen und über das gespeicherte fehlersichere Anwenderprogramm eine zweite Signatur zu bilden und einen Vergleich der beiden Signaturen durchzuführen, wobei für den Fall der Ungleichheit das Master-Ablaufprotokoll eine Fehlermeldung absetzt. Sollte also diese Fehlermeldung auftauchen, weiß ein Anwender sofort Bescheid, dass in seinem fehlersicheren Anwenderprogramm, welches ja von einem anderen Anlagenmodul bzw. einem anderen Hauptautomatisierungsgerät kopiert wurde, ein Fehler vorliegt und er die Anlage so nicht in Betrieb nehmen kann. Das Kennzeichen dafür sind die unterschiedlichen Signaturen der Anwenderprogramme.

Die Zeichnung zeigt ein Ausführungsbeispiel der Erfindung. Dabei zeigt die
- FIG 1: ein Prinzip einer Serienmaschine am Beispiel eines Anlagenmoduls,
- FIG 2: ein Schema eines Anwenderprogramms,
- FIG 3: einen Serienmaschinenverbund umfassend ein erstes Anlagenmodul und ein zweites Anlagenmodul,
- FIG 4: eine Inbetriebnahme eines weiteren Anlagenmoduls als Serienmaschine,
- FIG 5: ein Master-Ablaufprotokoll zum Ablauf in einem der sicheren Hauptautomatisierungsgeräte und
- FIG 6: ein Slave-Ablaufprotokoll zum Ablauf in einem der sicheren Unterautomatisierungsgeräte.

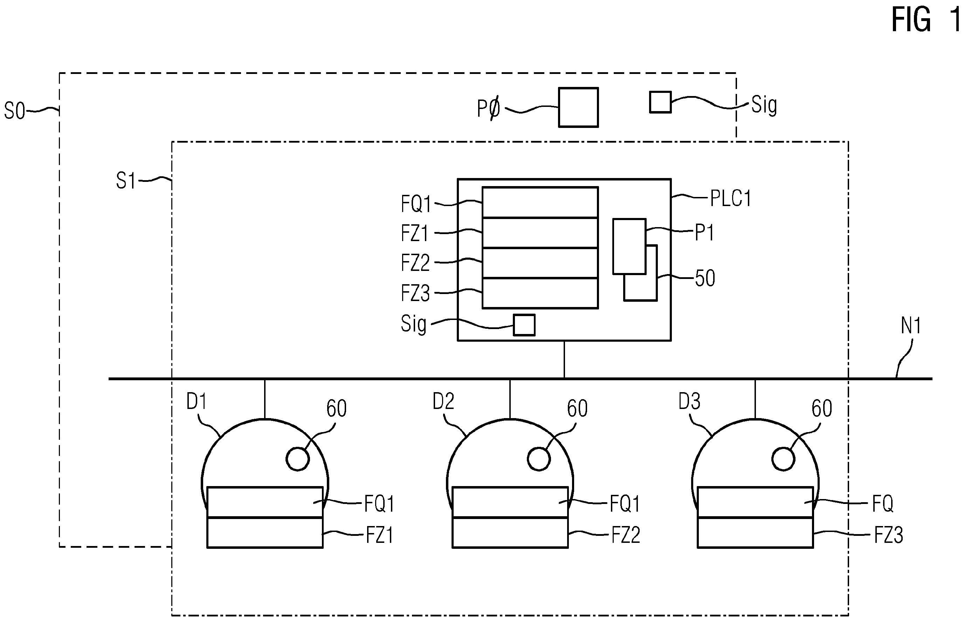

Gemäß FIG 1 ist ein erstes Anlagenmodul S1 als eine Serienmaschine dargestellt. Das Anlagenmodul S1 umfasst ein Hauptautomatisierungsgerät PLC1, eine Mehrzahl von Unterautomatisierungsgeräten D1,D2,D3, welche alle an ein erstes Netzwerk N1 angeschlossen sind. Das Hauptautomatisierungsgerät PLC1 und das erste Unterautomatisierungsgerät D1, das zweite Unterautomatisierungsgerät D2 und das dritte Unterautomatisierungsgerät D3 sind alle für eine funktional sichere Kommunikation über das erste Netzwerk N1 ausgelegt. Für die funktional sichere Kommunikation ist das Hauptautomatisierungsgerät PLC1 mit einer ersten F-Quelladresse FQ1 und die Unterautomatisierungsgeräte D1,D2,D3 entsprechend mit einer F-Zieladresse FZ1,FZ2,FZ3 ausgestaltet. In dem Hauptautomatisierungsgerät PLC1 ist ein fehlersicheres Anwenderprogramm P1 ablauffähig gespeichert. In einem Originalanwenderprogramm P0 wurde bereits einmal eine Signatur über den Programmcode gebildet.

Diese, über das Originalanwenderprogramm gebildete Signatur steht dafür, dass das Originalanwenderprogramm einmal getestet, geprüft und zertifiziert wurde und somit fehlerfrei arbeitet. Diese Signatur wird dem ersten Anwenderprogramm in dem ersten Hauptautomatisierungsgerät PLC1 mitgegeben. Die Signatur ist mit Sig bezeichnet.

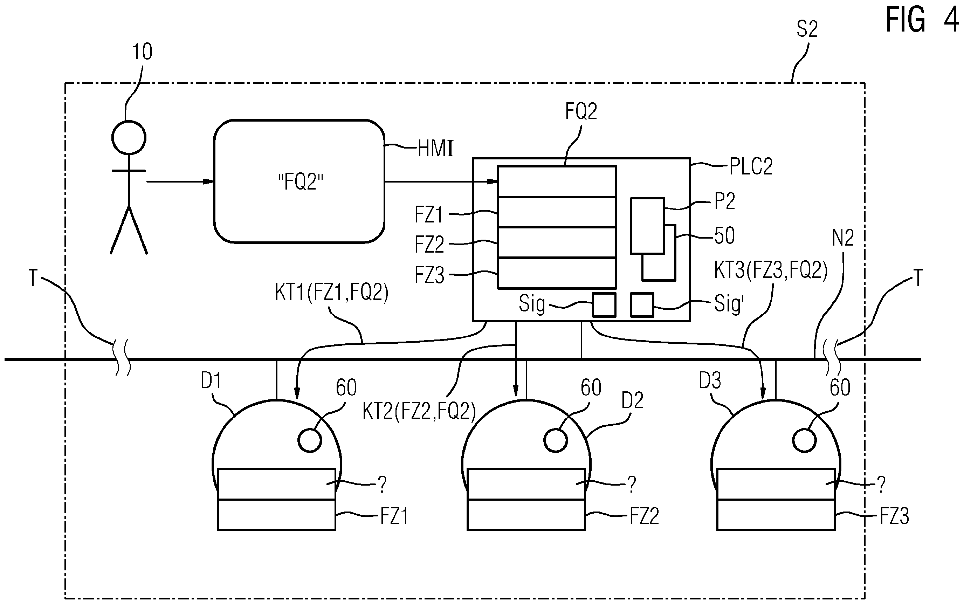

Für eine Anpassung der F-Adressen für das Hauptautomatisierungsgerät PLC1 und die Unterautomatisierungsgeräte D1,D2,D3 ist in dem Hauptautomatisierungsgerät PLC1 ein Master-Ablaufprotokoll 50 implementiert. Das Master-Ablaufprotokoll 50 ist ausgestaltet, auf ein Kommando (siehe auch FIG 4), welches zur Anpassung der F-Adressen auffordert zu warten.

Gemäß FIG 4 wird bei einem Inbetriebnahmetest einer Serienmaschine ein zweites Anlagenmodul S2 betriebsbereit geschaltet. Ein Inbetriebnehmer 10 gibt über ein Bedienpanel HMI bei der Inbetriebnahme des zweiten Anlagenmoduls S2 eine neue Master-ID, sprich die zweite (neue) F-Quelladresse FQ2, für das zweite Hauptautomatisierungsgerät PLC2 vor. Demzufolge wird die zweite F-Quelladresse FQ2 von dem Inbetriebnehmer 10 zum zweiten Hauptautomatisierungsgerät PLC2 geschickt. Im zweiten Hauptautomatisierungsgerät PLC2 ist neben dem zweiten fehlersicheren Anwenderprogramm P2 das Master-Ablaufprotokoll 50 implementiert. Das Master-Ablaufprotokoll 50 sorgt dafür, dass jeweils ein Konfigurationstelegramm KT1,KT2,KT3 mit der zweiten (neuen) F-Quelladresse FQ2 und der jeweiligen F-Zieladresse FZ1,FZ2,FZ3 zu den jeweiligen Unterautomatisierungsgerät D1,D2,D3 gesendet wird.

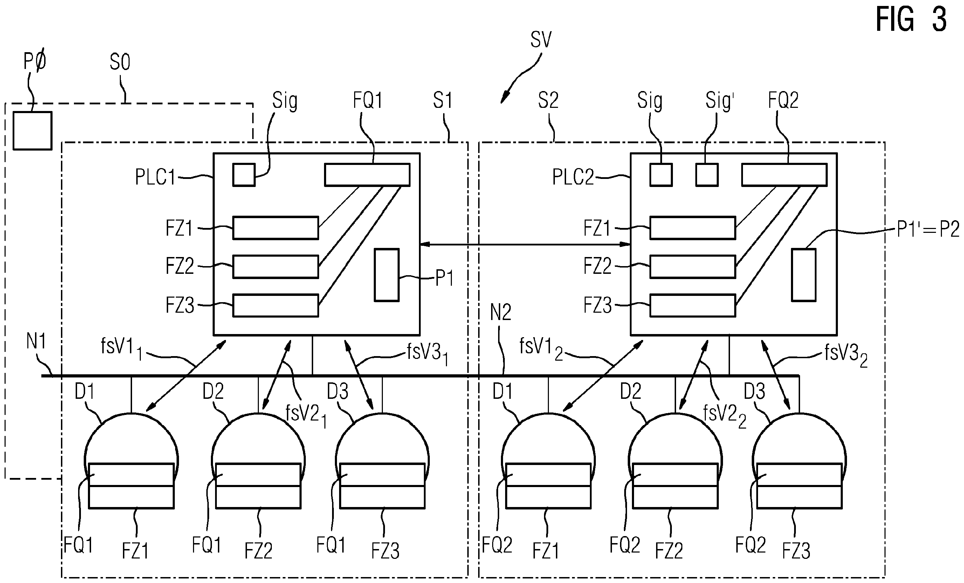

Weiterhin ist in den Unterautomatisierungsgeräten D1,D2,D3 ein Slave-Ablaufprotokoll 60 implementiert. Dieses ist ausgestaltet, in den Automatisierungsgeräten D1,D2,D3 die gewollte Anpassung der F-Quelladresse FQ2 mittels des Konfigurationstelegramms KT1,KT2,KT3 zu erkennen und daraufhin zu prüfen, ob das Konfigurationstelegramm KT1,KT2,KT3 zusätzlich die jeweilige F-Zieladresse FZ1,FZ2,FZ3 des jeweiligen Unterautomatisierungsgerätes D1,D2,D3 für welche die F-Quelladresse FQ2 angepasst werden soll, enthält. Fällt diese Prüfung positiv aus, wird die zweite (neue) F-Quelladresse FQ2 für das Unterautomatisierungsgerät D1,D2,D3 übernommen. Während dieses Vorgangs wird das zweite Netzwerk N2 über eine Trennung T von weiteren Netzwerken, insbesondere im Hinblick auf FIG 3, von dem ersten Netzwerk N1 getrennt.

Mit der FIG 3 ist der Serienmaschinenverbund SV, umfassend das erste Anlagenmodul S1 und das zweite Anlagenmodul S2 im Zusammenhang dargestellt. Als Schatten befindet sich hinter dem ersten Anlagenmodul S1 das Ur-Anlagenmodul S0, auf dessen Basis alle weiteren Serienmaschinen mit Hilfe des Verfahrens zur Anpassung von F-Adressen in Betrieb genommen werden.

Auf der Basis des Ur-Anlagenmoduls S0 wurde auch ein Original-Anwenderprogramm P0 erstellt, über dessen Code eine Signatur Sig gebildet wurde. Diese Signatur Sig wird bei der Erstellung der Kopie des ersten Anwenderprogramms P1 in das zweite Anwenderprogramm P2 mitgeliefert und in dem zweiten Hauptautomatisierungsgerät PLC2 wird ebenfalls über das kopierte zweite Anwenderprogramm P2 eine Signatur Sig' gebildet. Die erste Signatur Sig und die zweite Signatur Sig' werden sodann im zweiten Hauptautomatisierungsgerät PLC2 auf Gleichheit geprüft. Sollte Ungleichheit vorliegen, so wird eine Fehlermeldung ausgegeben.

Das erste Hauptautomatisierungsgerät PLC1 hält nun zu den Unterautomatisierungsgeräten D1,D2,D3 jeweils eine erste funktional sichere Verbindung fsV1₁, eine zweite funktional sichere Verbindung fsV2₁ und eine dritte funktional sichere Verbindung fsV3₁ aufrecht. Zwischen dem ersten Hauptautomatisierungsgerät PLC1 und dem zweiten Hauptautomatisierungsgerät PLC2 kann auch eine funktional sichere Verbindung hergestellt werden. Das zweite Hauptautomatisierungsgerät PLC2 hält nun zu seinen Unterautomatisierungsgeräten D1,D2,D3 eine erste funktional sichere Verbindung fsV1₂, eine zweite funktional sichere Verbindung fsV2₂ und eine dritte funktional sichere Verbindung fsV3₂ aufrecht.

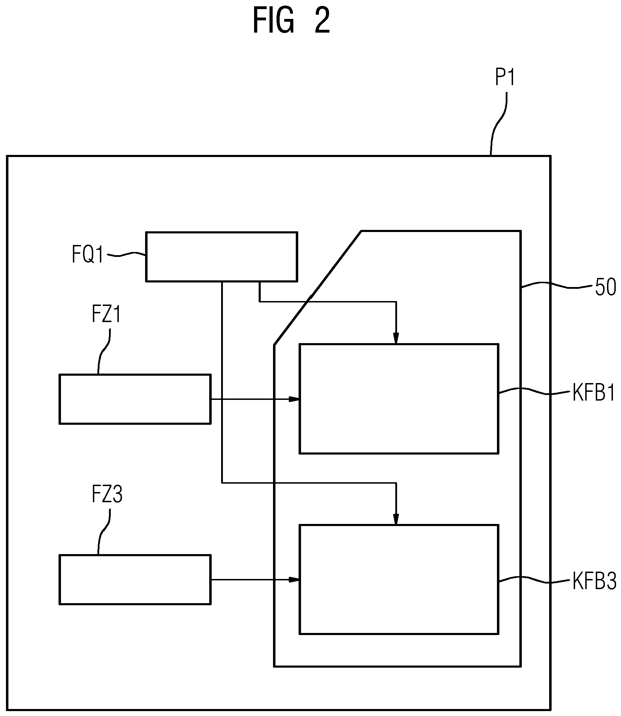

FIG 2 zeigt schematisch ein fehlersicheres erstes Anwenderprogramm P1. Es enthält eine erste F-Quelladresse FQ1, welche beispielsweise vorgegeben wurde, und die entsprechenden F-Zieladressen FZ1,...,FZ3. Über einen ersten Kommunikations-Funktionsbaustein KFB1 und letztendlich einen dritten Kommunikations-Funktionsbaustein KFB3 werden innerhalb des Master-Ablaufprotokolls 50 die Kommunikationstelegramme KT1,KT2,KT3 zum Umparametrieren der Submodule gebildet.

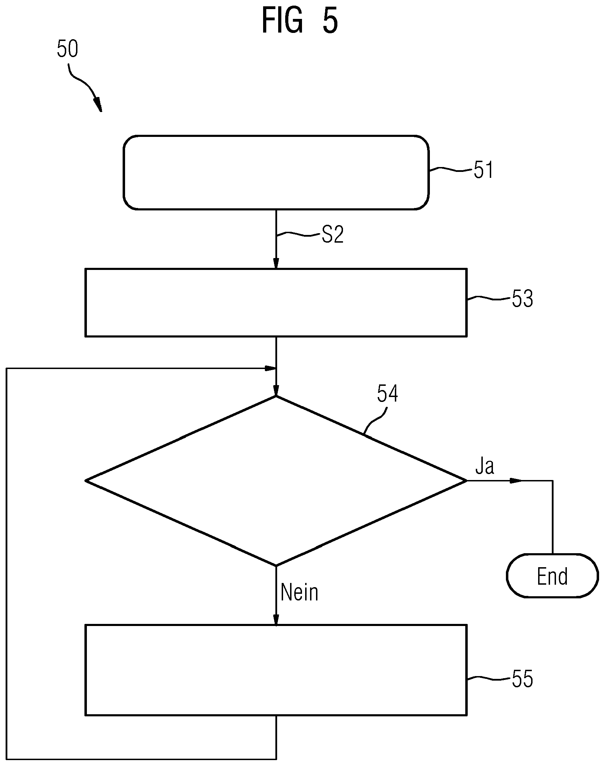

FIG 5 zeigt als Programmablaufplan das Master-Ablaufprotokoll 50. In einem Schritt "Warte auf HMI-Kommando" 51 wird die Änderungsanfrage einer Master ID bzw. der F-Quelladresse abgewartet. In einem weiteren Schritt "HMI-Kommando erhalten" 52 wird die Änderung bestätigt. Die F-Quelladresse wird in einem Abspeicherschritt 53 abgespeichert und in dem Schritt "sende Konfigurationstelegramm" 54 wird solange an die Unterautomatisierungsgeräte D1,D2,D3 gesendet bis alle Unterautomatisierungsgeräte D1,D2,D3 mit den neuen Adressen versorgt sind, bis schließlich das Ende erreicht ist.

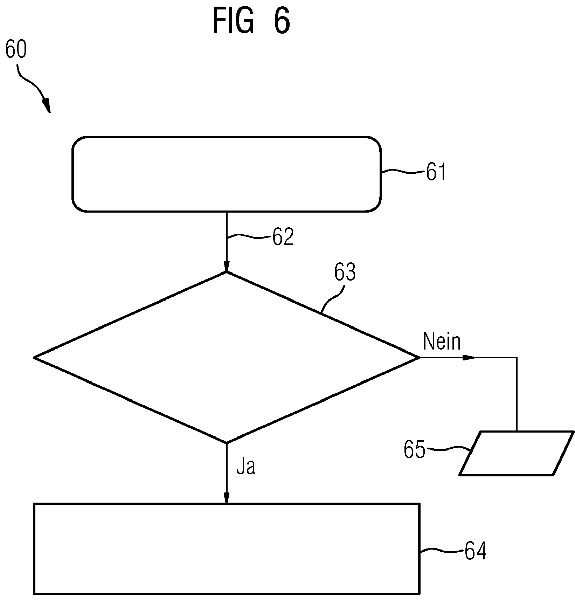

Gemäß FIG 6 ist das Slave-Ablaufprotokoll 60, welches in den Unterautomatisierungsgeräten D1,D2,D3 zum Ablauf gebracht wird, dargestellt. Ein Warte-Schritt 61 "warte auf Kommando Änderung der Master-ID" und der folgende Programmschritt "Kommando erhalten" 62 lassen eine Prüfung starten 63 ob die F-Zieladresse korrekt ist, ist dies der Fall, wird in dem Schritt "Übernahme neue F-Quelladresse" 64 die neue F-Quelladresse übernommen, ist dies nicht der Fall wird eine Fehlermeldung 65 generiert.

## Patentansprüche

1. Verfahren zur Anpassung von F-Adressen für ein zu einem bereits existierenden ersten Anlagenmodul (S1) in Betrieb zu nehmendes zweites Anlagenmodul (S2), wobei die Anlagenmodule (S1,S2) jeweils ein erstes Hauptautomatisierungsgerät (PLC1, beziehungsweise ein zweites Hauptautomatisierungsgerät (PLC2), eine Mehrzahl von Unterautomatisierungsgeräten (D1,D2,D3) und ein Netzwerk (N1,N2) aufweisen, wobei die Hauptautomatisierungsgeräte (PLC1, PLC2) und die Unterautomatisierungsgeräte (D1,D2,D3) für eine funktional sichere Kommunikation über das Netzwerk (N1,N2) ausgelegt sind und in dem ersten Anlagenmodul (S1) bereits im Vorfeld für eine funktional sichere Verbindungsidentifizierung und für eine funktional sichere Kommunikation F-Adressen vergeben worden sind und dadurch dem ersten Hauptautomatisierungsgerät (PLC1) eine erste F-Quelladresse (FQ1) und den Unterautomatisierungsgeräten (D1,D2,D3) entsprechend jeweils eine F-Zieladresse (FZ1,FZ2,FZ3) zugeordnet wurde, wobei in dem ersten Hauptautomatisierungsgerät (PLC1) ein erstes Anwenderprogramm (P1) geladen wurde, in welchem die F-Zieladressen (FZ1,FZ2,-FZ3) zur Adressierung genutzt werden,
**dadurch gekennzeichnet, dass** für eine Anpassung der F-Adressen für das zweite Anlagenmodul (S2), welches nach einem Anlagenkonzept für die Serienfertigung von Anlagenmodulen ausgehend von einem Ur-Anlagenmodul (S0) analog zu dem ersten Anlagenmodul (S1) aufgebaut wurde, folgende Schritte durchgeführt werden:
- in das zweite Hauptautomatisierungsgerät (PLC2) wird eine Kopie des ersten Anwenderprogramms (P1,P1') geladen und damit ein zweites Anwenderprogramm (P2) in dem zweiten Hauptautomatisierungsgerät (PLC2) erzeugt,
- für das zweite Hauptautomatisierungsgerät (PLC2) wird eine zweite F-Quelladresse (FQ2) vergeben,
- vom zweiten Hauptautomatisierungsgerät (PLC2) wird jeweils ein Konfigurationstelegramms (KT1, KT2, KT3) mit der zweiten F-Quelladresse (FQ2) und der jeweiligen F-Zieladresse (FZ1,FZ2,FZ3) zu den Unterautomatisierungsgeräten (D1,D2,-D3) des zweiten Anlagenmoduls (S2) gesendet, wobei die zweite F-Quelladresse (FQ2) in den Unterautomatisierungsgeräten (D1,D2,D3) gespeichert wird, und wobei während dieses Vorgangs das zweite Netzwerk (N2) kommunikativ vom ersten Netzwerk (N1) getrennt wird,
- in den Unterautomatisierungsgeräten (D1,D2,D3) wird die gewollte Anpassung der F-Quelladresse (FQ2) mittels des Konfigurationstelegramms (KT1, KT2, KT3) erkannt und daraufhin wird geprüft, ob das Konfigurationstelegramm (KT1, KT2, KT3) zusätzlich die jeweilige F-Zieladresse (FZ1,FZ2,FZ3) des jeweiligen Unterautomatisierungsgerätes (D1,D2,D3), für welche die F-Quelladresse (FQ2) angepasst werden soll, enthält, wenn diese Prüfung positiv ausfällt wird die zweite F-Quelladresse (FQ2) für das Unterautomatisierungsgerät (D1,D2,D3) übernommen,
- im zweiten Hauptautomatisierungsgerät (PLC2) wird geprüft, ob alle Unterautomatisierungsgeräte (D1,D2,D3) angepasst wurden.

2. Verfahren nach Anspruch 1, wobei zusätzlich bei jeder Kommunikation zu einem Unterautomatisierungsgerät (D1,D2,D3) in dem Unterautomatisierungsgerät (D1,D2,D3) geprüft wird, ob die gespeicherten F-Adressen mit denen in einem für die Kommunikation empfangenen Telegramm übereinstimmen.

3. Verfahren nach Anspruch 1 oder 2, wobei über einen Code des Anwenderprogramms (P1) des ersten Hauptautomatisierungsgeräts (PLC1) eine erste Signatur (Sig) gebildet wird und beim Erzeugen des zweiten Anwenderprogramms (P2) dem zweiten Hauptautomatisierungsgerät (PLC2) mitgeliefert wird, wobei das zweite Hauptautomatisierungsgerät (PLC2) über das zweite Anwenderprogramm (P2) eine zweite Signatur (Sig') bildet und einen Vergleich der beiden Signaturen (Sig,Sig') durchführt und für den Fall der Ungleichheit eine Fehlermeldung ausgegeben wird.

4. Verfahren nach einem der Ansprüche 1 bis 3, wobei die funktional sichere Kommunikation über das Netzwerk (N1,N2) mittels OPC UA Safety oder PROFIsafe durchgeführt wird.

5. Anlagenmodul (S2) umfassend
ein Hauptautomatisierungsgerät (PLC2),
eine Mehrzahl von Unterautomatisierungsgeräten (D1,D2,D3), ein Netzwerk (N1,N2),
wobei das Hauptautomatisierungsgerät (PLC2) und die Unterautomatisierungsgeräte (D1,D2,D3) für eine funktional sichere Kommunikation über das Netzwerk (N1,N2) ausgelegt sind,
dazu ist das Hauptautomatisierungsgerät (PLC1) mit einer ersten F-Quelladresse (FQ1) und die Unterautomatisierungsgeräte (D1,D2,D3) entsprechend mit einer F-Zieladresse (FZ1,FZ2,FZ3) ausgestaltet, und in dem Hauptautomatisierungsgerät (PLC1) ist ein fehlersicheres Anwenderprogramm (P1) gespeichert, **dadurch gekennzeichnet, dass** für eine Anpassung der F-Adressen für das Hauptautomatisierungsgerät (PLC1) und die Unterautomatisierungsgeräte (D1,D2,D3) ein Master-Ablaufprotokoll (50) in dem Hauptautomatisierungsgerät (PLC1) implementiert ist, wobei das Master-Ablaufprotokoll (50) ausgestaltet ist auf ein Kommando, welches zur Anpassung der F-Adressen auffordert, zu warten und folgendes auszuführen:
eine zweite F-Quelladresse (FQ2) wird entweder intern generiert oder mit dem Kommando mitgeliefert, und dann wird jeweils ein Konfigurationstelegramm (KT1, KT2, KT3) mit der zweiten F-Quelladresse (FQ2) und der jeweiligen F-Zieladresse (FZ1,FZ2,FZ3) zu den Unterautomatisierungsgeräten (D1,D2,D3) gesendet,
weiterhin ist in den Unterautomatisierungsgeräten (D1,D2,D3) ein Slave-Ablaufprotokoll (60) implementiert, und ausgestaltet in den Unterautomatisierungsgeräten (D1,D2,D3) die gewollte Anpassung der F-Quelladresse (FQ2) mittels des Konfigurationstelegramms (KT1, KT2, KT3) zu erkennen und daraufhin zu prüfen, ob das Konfigurationstelegramm (KT1, KT2, KT3) zusätzlich die jeweilige F-Zieladresse (FZ1,FZ2,FZ3) des jeweiligen Unterautomatisierungsgerätes (D1,D2,D3) für welche die F-Quelladresse (FQ2) angepasst werden soll enthält, wenn diese Prüfung positiv ausfällt, wird die zweite F-Quelladresse (FQ2) für das Unterautomatisierungsgerät (D1,D2,D3) übernommen.

6. Anlagenmodul (S1) nach Anspruch 5,
**dadurch gekennzeichnet, dass** das Master-Ablaufprotokoll (50) weiterhin ausgestaltet ist, eine erste Signatur (Sig) eines Original-Anwenderprogramms (P0) entgegen zu nehmen und über das gespeicherte fehlersichere Anwenderprogramm (P1) eine zweite Signatur (Sig') zu bilden und einen Vergleich der beiden Signaturen (Sig,Sig1) durchzuführen, wobei für den Fall der Ungleichheit das Master-Ablaufprotokoll (50) eine Fehlermeldung absetzt.
